# EUROPEAN PATENT APPLICATION

(11) **EP 4 756 777 A1**
(43) Date of publication of application: **10.06.2026**
(21) Application number: 25220369.0
(22) Date of filing: 03.12.2025
(51) Int. Cl.: G08G 1/00, H04W 4/021

(54) **PROGRAM, IN-VEHICLE APPARATUS, AND INFORMATION PROCESSING METHOD**

(30) Priority: 04.12.2024 JP 2024210981
(71) Applicant: Toyota Jidosha Kabushiki Kaisha, Toyota-shi, Aichi-ken 471-8571 (JP)
(72) Inventor: KATO, Shodai, Toyota-shi, 471-8571 (JP); SONODA, Minoru, Toyota-shi, 471-8571 (JP)
(74) Representative: D Young & Co LLP

(57) **Abstract**

A program according to an aspect of the present disclosure is a program for causing an in-vehicle apparatus to execute an information processing method. The information processing method includes: acquiring vehicle information indicating a current state of a vehicle; selecting whether or not to execute a determination of a geofence according to the acquired vehicle information; when selecting to execute the determination of a geofence, acquiring a current position as measured by a positioning module, executing the determination of a geofence according to the acquired current position, and outputting information related to a result of the determination; and when selecting not to execute the determination of a geofence, omitting the execution of the determination of a geofence.

## Description

### BACKGROUND

### Technical Field

The present disclosure relates to a program, an in-vehicle apparatus, and an information processing method.

### Description of the Related Art

In recent years, there have been advances in the development of technology to utilize geofences. A geofence is an area enclosed by a virtual boundary. In geofence technology, basically, whether a user (or device) is inside or outside a geofence is determined according to a current position of the user (or device). The inside/outside determination may include a determination of whether the user (or device) has entered the geofence or exited the geofence. Subsequently, according to a result of the inside/outside determination, an arbitrary action is executed.

For example, Japanese Translation of PCT International Application Publication No. 2016-528564 proposes a system that acquires a position of a user device, determines whether or not the user device has entered a geofence based on the acquired position, and provides a warning if the user device is determined to have entered the geofence. In addition, Japanese Translation of PCT International Application Publication No. 2018-507568 proposes a system in which a server apparatus delivers definition data of a geofence that exists within a predetermined range (threshold distance range) from a current position of a client apparatus to each client apparatus, and each client apparatus executes determination processing of the geofence according to the delivered definition data.

### SUMMARY

An object of the present disclosure is to provide a technique for improving efficiency of determination processing of a geofence.

A program according to a first mode of the present disclosure is a program for causing an in-vehicle apparatus to execute an information processing method. The information processing method includes: acquiring vehicle information indicating a current state of a vehicle; selecting whether or not to execute a determination of a geofence according to the acquired vehicle information; when selecting to execute the determination of a geofence, acquiring a current position as measured by a positioning module, executing the determination of a geofence according to the acquired current position, and outputting information related to a result of the determination; and when selecting not to execute the determination of a geofence, omitting the execution of the determination of a geofence.

An in-vehicle apparatus according to a second mode of the present disclosure includes a controller. The controller is configured to execute: acquiring vehicle information indicating a current state of a vehicle; selecting whether or not to execute a determination of a geofence according to the acquired vehicle information; when selecting to execute the determination of a geofence, acquiring a current position as measured by a positioning module, executing the determination of a geofence according to the acquired current position, and outputting information related to a result of the determination; and when selecting not to execute the determination of a geofence, omitting the execution of the determination of a geofence.

An information processing method according to a third mode of the present disclosure is executed by a computer. The information processing method includes: acquiring vehicle information indicating a current state of a vehicle; selecting whether or not to execute a determination of a geofence according to the acquired vehicle information; when selecting to execute the determination of a geofence, acquiring a current position as measured by a positioning module, executing the determination of a geofence according to the acquired current position, and outputting information related to a result of the determination; and when selecting not to execute the determination of a geofence, omitting the execution of the determination of a geofence.

According to the present disclosure, an improvement in efficiency of determination processing of a geofence can be expected.

### BRIEF DESCRIPTION OF THE DRAWINGS

Fig. 1 schematically illustrates an example of a situation where the present disclosure is applied;
Fig. 2 schematically illustrates an example of a method of defining a geometry (area) of a geofence according to the present disclosure;
Fig. 3 schematically illustrates an example of a method of defining a geometry (area) of a geofence according to the present disclosure;
Fig. 4 schematically illustrates an example of a method of defining a geometry (area) of a geofence according to the present disclosure;
Fig. 5 schematically illustrates an example of a method of integrating geometries according to the present disclosure;
Fig. 6 schematically illustrates an example of a method of integrating geometries according to the present disclosure;
Fig. 7 schematically illustrates an example of a method of integrating geometries according to the present disclosure;
Fig. 8 schematically illustrates an example of a determination execution condition according to the present disclosure;
Fig. 9 schematically illustrates an example of a determination execution condition according to the present disclosure;
Fig. 10 schematically illustrates an example of a determination execution condition according to the present disclosure;
Fig. 11 schematically illustrates an example of a configuration (data structure) of geofence definition data according to the present disclosure;
Fig. 12 schematically illustrates an example of a hardware configuration of an in-vehicle apparatus according to the present disclosure;
Fig. 13 schematically illustrates an example of a software configuration of the in-vehicle apparatus according to the present disclosure; and
Fig. 14 is a flow chart illustrating an example of a processing procedure related to a determination of a geofence according to the present disclosure.

### DESCRIPTION OF THE EMBODIMENTS

In situations where a geofence is applied to a vehicle, periodic execution of determination processing of the geofence may result in wasteful processing. For example, let us envision a situation where a geofence is set up for issuing a warning to a vehicle traveling at a higher speed than a predetermined speed. In this situation, if the determination processing of a geofence is executed even though a warning will not be issued due to the vehicle traveling at a lower speed than the predetermined speed, the execution of the determination processing may be a waste.

In contrast, the program according to the first mode of the present disclosure is a program for causing an in-vehicle apparatus to execute an information processing method. The information processing method includes: acquiring vehicle information indicating a current state of a vehicle; selecting whether or not to execute a determination of a geofence according to the acquired vehicle information; when selecting to execute the determination of a geofence, acquiring a current position as measured by a positioning module, executing the determination of a geofence according to the acquired current position, and outputting information related to a result of the determination; and when selecting not to execute the determination of a geofence, omitting the execution of the determination of a geofence.

According to the first mode of the present disclosure, whether or not to execute the determination processing of a geofence can be controlled according to a current state of a vehicle (vehicle information). Accordingly, the execution of a determination of a geofence can be omitted in a situation where it is possible to determine from the state of the vehicle that the determination of a geofence is not required such as when omitting an execution of the determination processing of a geofence in response to the vehicle traveling at a low speed, for example, in the situation described above. Therefore, since executions of wasteful determination processing can be suppressed, an improvement in efficiency of determination processing of a geofence can be expected.

Note that the form of the present disclosure need not be limited to the program described above. As another form of the program according to the mode described above, an aspect of the present disclosure may be any of an information processing apparatus (in-vehicle apparatus) that realizes all of or part of each component described above, an information processing method, or a storage medium readable by a machine such as a computer that stores a program. In this case, the storage medium readable by a machine may be a non-transitory medium that accumulates information such as programs by an electrical action, a magnetic action, an optical action, a mechanical action, or a chemical action. The non-transitory storage medium may include a storage medium (CD, DVD, semiconductor memory, or the like), an auxiliary storage apparatus of a computer, or an external main memory connected to a computer.

For example, the in-vehicle apparatus according to the second mode of the present disclosure may include a controller. The controller may be configured to execute: acquiring vehicle information indicating a current state of a vehicle; selecting whether or not to execute a determination of a geofence according to the acquired vehicle information; when selecting to execute the determination of a geofence, acquiring a current position as measured by a positioning module, executing the determination of a geofence according to the acquired current position, and outputting information related to a result of the determination; and when selecting not to execute the determination of a geofence, omitting the execution of the determination of a geofence.

In addition, for example, the information processing method according to the third mode of the present disclosure may be executed by a computer. The information processing method may include: acquiring vehicle information indicating a current state of a vehicle; selecting whether or not to execute a determination of a geofence according to the acquired vehicle information; when selecting to execute the determination of a geofence, acquiring a current position as measured by a positioning module, executing the determination of a geofence according to the acquired current position, and outputting information related to a result of the determination; and when selecting not to execute the determination of a geofence, omitting the execution of the determination of a geofence.

Hereinafter, an embodiment according to an aspect of the present disclosure will be described based on the drawings. However, note that the present embodiment described below is in all respects merely illustrative of the present disclosure. Various improvements or modifications may be made without departing from the scope of the present disclosure. In implementing the present disclosure, specific configurations in accordance with embodiments may be adopted as appropriate. Although the data appearing in the present embodiment is described by natural language, more specifically, the data is designated by pseudo-language, commands, parameters, machine language, electrical signals, and the like which can be recognized by computers and other machines.

### [1 Example of application]

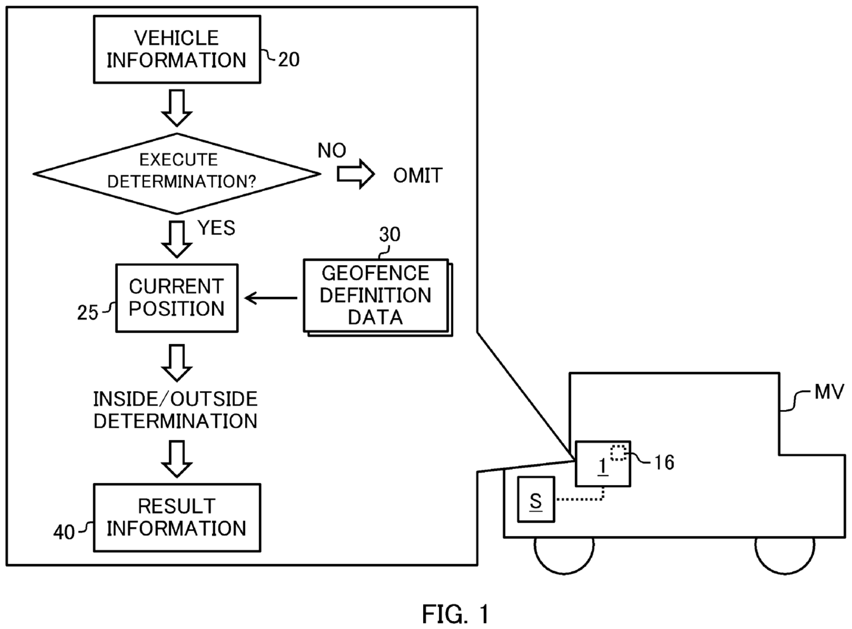

Fig. 1 schematically illustrates an example of a situation where the present disclosure is applied. An in-vehicle apparatus 1 according to the present embodiment is one or more computers configured to hold geofence definition data 30 in a memory resource and execute determination processing of a geofence that is defined by the held geofence definition data 30 at any timing.

The in-vehicle apparatus 1 according to the present embodiment acquires vehicle information 20 indicating a current state of a vehicle MV. The in-vehicle apparatus 1 selects whether or not to execute a determination of a geofence according to the acquired vehicle information 20. When the in-vehicle apparatus 1 selects to execute the determination of a geofence, the in-vehicle apparatus 1 acquires a current position 25 as measured by a positioning module 16. The in-vehicle apparatus 1 executes the determination of a geofence according to the acquired current position 25. In addition, the in-vehicle apparatus 1 outputs information 40 (result information) related to a result of the determination. On the other hand, when the in-vehicle apparatus 1 selects not to execute the determination of a geofence, the in-vehicle apparatus 1 omits the execution of the determination of a geofence.

Note that the determination of a geofence may be constituted of determining whether the acquired current position 25 is inside or outside a geofence defined by the held geofence definition data 30. The determination of the geofence may be executed continuously. When the determination of the geofence is executed continuously, the in-vehicle apparatus 1 may further determine a transition state of the vehicle MV with respect to the geofence according to a previous determination result and a current determination result. A type of the transition state may be defined as appropriate in accordance with the embodiment. In one example, the type of the transition state may include at least one of staying outside the geofence, entering the geofence from outside, staying inside the geofence, and exiting the geofence to the outside. Note that, in the following description, determining whether the current position 25 is inside or outside a geofence (in other words, the determination of a geofence) will also be referred to as an "inside/outside determination of a geofence".

As described above, in the present embodiment, whether or not to execute the determination processing of a geofence can be controlled according to a current state of the vehicle MV (vehicle information 20). Accordingly, the execution of a determination of a geofence can be omitted in a situation where it is possible to determine from the state of the vehicle MV that the determination of a geofence is not required. Therefore, according to the present embodiment, since executions of wasteful determination processing can be suppressed, an improvement in efficiency of determination processing of a geofence can be expected.

### [In-vehicle apparatus]

The in-vehicle apparatus 1 may be any computer deployed in the vehicle MV at least on a temporary basis. For example, the in-vehicle apparatus 1 may be an in-vehicle device that is mounted to the vehicle MV or a terminal device (such as a user terminal) that is temporarily deployed in the vehicle MV when the user uses the vehicle MV. In one example, the in-vehicle apparatus 1 may be a computer that constitutes at least a part of the vehicle MV. In another example, the vehicle MV may include a computer separate from the in-vehicle apparatus 1 and the in-vehicle apparatus 1 may be used being connected to the computer.

In the present embodiment, the in-vehicle apparatus 1 may be configured to be capable of acquiring a current position (current position 25) as measured by the positioning module 16. The positioning module 16 may be arranged at any location where a position of the vehicle MV can be measured. In one example, the in-vehicle apparatus 1 may have the positioning module 16 provided inside (in other words, built in). In another example, the positioning module 16 may be arranged outside of the in-vehicle apparatus 1 (for example, vehicle MV). The in-vehicle apparatus 1 may be directly or indirectly connected to the positioning module 16 deployed outside. Being indirectly connected may be constituted of being connected via a network (such as a controller area network), another computer, or the like.

Note that the current position 25 may be the position as measured by the positioning module 16 as it is, a position obtained by correcting a measurement result of the positioning module 16 in any way, or a position predicted from the measurement result of the positioning module 16. In one example, the positioning module 16 may indirectly measure the current position of the vehicle MV by being mounted to the in-vehicle apparatus 1 that is deployed in the vehicle MV. In another example, the positioning module 16 may directly measure a current position of the vehicle MV by being mounted to the vehicle MV.

### [Vehicle]

A type of the vehicle MV need not be particularly limited and may be selected as appropriate in accordance with the embodiment. The vehicle MV may include a manually operated vehicle and an autonomous vehicle. The vehicle MV may be selected from, for example, a motorcycle, a three-wheeled vehicle, and a four-wheeled vehicle. A power source of the vehicle MV may be selected from, for example, electricity and fuel. In one example, the vehicle MV may be a hybrid vehicle. In addition, a size of the vehicle MV may be selected arbitrarily. For example, when the vehicle MV is an automobile, the size of the vehicle MV may be selected from large, mid-size, semi-mid-size, standard, special large, special small, and the like. When the vehicle MV is a motorcycle, the size of the vehicle MV may be selected from large, standard, and the like.

### [Vehicle information]

The vehicle information 20 may include any information related to the state of the vehicle MV. For example, the vehicle information 20 may include information such as a travel speed, a travel mode, and a photographing mode of a driving recorder. The vehicle information 20 is an indicator for selecting whether or not to execute a determination of a geofence. A type of vehicle information 20 to be used as the indicator (in other words, vehicle information 20 to be referenced upon determination) may be selected as appropriate in accordance with the embodiment such as a condition for selecting whether or not to execute a determination of a geofence. Note that in the present embodiment, the condition for selecting whether or not to execute a determination of a geofence is also referred to as a "determination execution condition".

The in-vehicle apparatus 1 may acquire the vehicle information 20 from the vehicle MV as appropriate. In one example, when the in-vehicle apparatus 1 constitutes at least a part of the vehicle MV, the in-vehicle apparatus 1 may acquire the vehicle information 20 from information held in the memory resource of the in-vehicle apparatus 1. Acquiring information from the memory resource of the in-vehicle apparatus 1 may also be included in acquiring information from the vehicle MV. In another example, when the in-vehicle apparatus 1 is used being connected to a computer of the vehicle MV, the in-vehicle apparatus 1 may acquire the vehicle information 20 from a component of the vehicle MV such as an electronic control unit (ECU).

In addition, at least a part of the vehicle information 20 (for example, a travel speed) may be obtained by an in-vehicle sensor S. A type of the in-vehicle sensor S to be used need not be particularly limited and may be selected as appropriate in accordance with the embodiment. For example, the in-vehicle sensor S may include a vehicle speed sensor and a positioning module. The in-vehicle apparatus 1 may be directly or indirectly connected to the in-vehicle sensor S and may acquire at least a part of the vehicle information 20 from the connected in-vehicle sensor S. For example, the in-vehicle sensor S may include a sensor for observing a state of an occupant of the vehicle MV such as a camera. The state of the vehicle MV may include the state of an occupant that is observed by the sensor.

In addition, in one example, the current state indicated by the vehicle information 20 may be a state of the vehicle MV at a time point where whether or not to execute the determination of a geofence is selected or a range in a vicinity of the time point. The vehicle information 20 indicating the current state may be acquired at any timing before selecting whether or not to execute a determination of a geofence. For example, the in-vehicle apparatus 1 may acquire the vehicle information 20 immediately before the vehicle information 20 is used in processing of selecting whether or not to execute a determination of a geofence. However, the timing of acquiring the vehicle information 20 need not be limited to this example and may be modified as appropriate in accordance with the embodiment. The timing at which the vehicle information 20 is acquired need not be immediately before the vehicle information 20 is used in processing of selecting whether or not to execute a determination of a geofence. In addition, the current state may be the state obtained from the vehicle MV as it is, a state obtained by correcting, by any method, the information obtained from the vehicle MV, or a state predicted based on the information obtained from the vehicle MV.

### [Geofence]

A geofence is an area enclosed by a virtual boundary set on a map. Any action can be executed in response to a detection of an event with respect to the area such as entry to the area. Therefore, in one example, a geofence may be defined by a geometry that demarcates the area (geographical range) and an action related to the area.

### (Geometry)

A method of defining a geometry need not be particularly limited and may be selected as appropriate in accordance with the embodiment. A known method may be adopted as the method of defining a geometry. Information on a geometry may include any information for demarcating an area (geographical range).

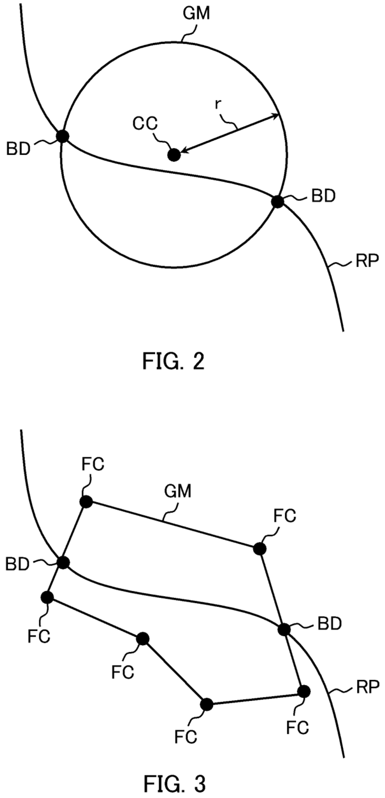

Figs. 2, 3, and 4 schematically illustrate an example of a method of defining a geometry GM (area) of a geofence according to the present embodiment. In one example, as illustrated in Fig. 2, the geometry GM may be defined by a center coordinate CC and a radius r. In this case, an area of the geofence may be demarcated as a circular range with a radius of r from the center coordinate CC. A circumference of the circle with the radius r centered on the center coordinate CC is the boundary of the area of the geofence. When a passage RP is given, a boundary of the geofence on the passage RP is an intersection BD of the boundary of the geofence and the passage RP. Note that the passage RP may be given by any method. For example, the passage RP may be a road, a sea route, or an air route. The passage RP may be given realistically in a real space or given virtually. The passage RP may be omitted.

In one example, as illustrated in Fig. 3, the geometry GM may be defined by a sequence of coordinates of feature points FC. In this case, an area of the geofence may be demarcated as a range of a closed polygon formed by connecting adjacent feature points FC to each other. A line connecting each feature point FC is the boundary of the area of the geofence. The passage RP and the boundary (intersection BD) are similar to the example in Fig. 2. Note that six feature points FC are specified in the one example in Fig. 3. However, the number of feature points FC need not be limited to such an example and may be selected as appropriate in accordance with the embodiment. The number of feature points FC may be any number equal to three or more.

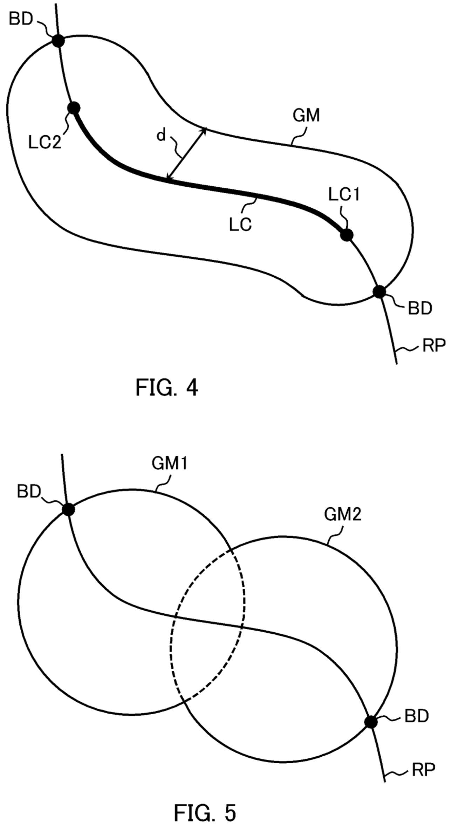

In one example, as illustrated in Fig. 4, the geometry GM may be defined by a link LC and a distance d from the link LC. In this case, an area of the geofence may be demarcated as a range with a capsule shape at the distance d from the link LC. An outer periphery of the capsule shape at the distance d from the link LC is the boundary of the area of the geofence. The passage RP and the boundary (intersection BD) are similar to the example in Fig. 2. Note that the link LC may be specified as appropriate. The link LC may be given as the passage RP such as a road link or given independently of the passage RP. Information on the link LC may be configured as appropriate. For example, the information on the link LC may include identification information such as a link ID. Range information indicating a range of the link LC may be held in any storage area in association with the identification information. Accordingly, the information on the link LC may be configured to indirectly indicate the range of the link LC. In addition, for example, the information on the link LC may be configured to directly indicate the range of the link LC by including the range information described above. For example, the range of the link LC may be specified by end points (LC1, LC2). Each of the end points (LC1, LC2) may be referred to as a start point or an end point. According to the example of the geometry GM, increasing a width of the link LC by the distance d makes the determination processing of the geofence (detection of an event with respect to the area) easier as compared to when the geofence is solely constituted of the link LC.

### (Integration of geometry)

An area of a geofence may be demarcated by one geometry or demarcated by a plurality of geometries. When an area is to be demarcated by a plurality of geometries, the plurality of geometries may be integrated (combined) as appropriate. A method of integrating geometries need not be particularly limited and may be selected as appropriate in accordance with the embodiment. In one example, integration of geometries may be defined by a logical operator such as a logical disjunction, a logical conjunction, and an exclusive disjunction.

Fig. 5 schematically illustrates an example (logical disjunction) of a method of integrating geometries (GM1 and GM2) according to the present embodiment. In Fig. 5, a situation is envisioned where a logical disjunction is adopted as a logical operator used to integrate the two geometries (GM1 and GM2). In this case, an area of a geofence is demarcated as an area including at least one of the geometry GM1 and the geometry GM2. When the current position (current position 25) belongs to the area of at least one of the geometry GM1 and the geometry GM2, the current position (current position 25) is determined to be inside the geofence. When the current position does not belong to the areas of both the geometry GM1 and the geometry GM2, the current position is determined to be outside the geofence. When a passage RP is given as illustrated in Fig. 5, a boundary of the geofence on the passage RP is the two intersections BD of an outer periphery (boundary) after combining the respective geometries (GM1 and GM2) and the passage RP.

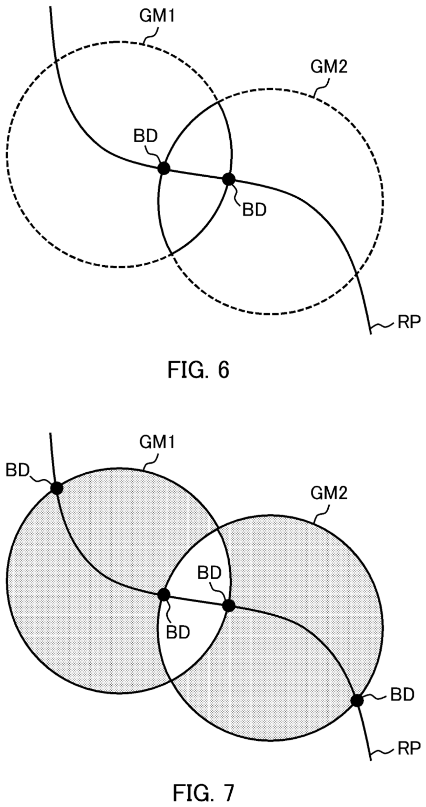

Fig. 6 schematically illustrates an example (logical conjunction) of a method of integrating geometries (GM1 and GM2) according to the present embodiment. In Fig. 6, a situation is envisioned where a logical conjunction is adopted as a logical operator used to integrate the two geometries (GM1 and GM2). In this case, an area of a geofence is demarcated as an area where the geometry GM1 and the geometry GM2 overlap with each other. When the current position belongs to the areas of both the geometry GM1 and the geometry GM2, the current position is determined to be inside the geofence. When the current position belongs to the area of only one of the geometry GM1 and the geometry GM2 or does not belong to the areas of both the geometry GM1 and the geometry GM2, the current position is determined to be outside the geofence. When a passage RP is given as illustrated in Fig. 6, a boundary of the geofence on the passage RP is the two intersections BD of an outer periphery of an overlapping range of the two geometries (GM1 and GM2) and the passage RP.

Fig. 7 schematically illustrates an example (exclusive disjunction) of a method of integrating geometries (GM1 and GM2) according to the present embodiment. In Fig. 7, a situation is envisioned where an exclusive disjunction is adopted as a logical operator used to integrate the two geometries (GM1 and GM2). In this case, an area of a geofence is demarcated as the area of only one of the geometry GM1 and the geometry GM2. When the current position belongs to the area of only one of the geometry GM1 and the geometry GM2, the current position is determined to be inside the geofence. When the current position belongs to the area where the geometry GM1 and the geometry GM2 overlap with each other or does not belong to any area, the current position is determined to be outside the geofence. When a passage RP is given as illustrated in Fig. 7, a boundary of the geofence on the passage RP is the two intersections BD of the boundaries of the respective geometries (GM1 and GM2) and the passage RP and the two intersections BD of an outer periphery of an overlapping range of the two geometries (GM1 and GM2) and the passage RP.

### (Action)

A method of defining an action need not be particularly limited and may be selected as appropriate in accordance with the embodiment. A known method may be adopted as the method of defining an action. In one example, an action may be defined by an execution content (action content) and an execution condition (action execution condition). In other words, an action may be defined to give "when" (execution condition) and "what" (execution content) to be executed with respect to the geographic range (geometry) being set.

### (A) Action content

An action content may be determined as appropriate in accordance with the embodiment such as a situation, an object, and the like of using a geofence. For example, the action content may include executing any action such as controlling an operation of an apparatus (vehicle MV, in-vehicle apparatus 1, in-vehicle sensor S, or the like), generating information, and outputting information. Controlling an operation of the apparatus may include, for example, operating the apparatus in a specific mode among a plurality of modes, causing the apparatus to execute a predetermined operation, allowing the apparatus to execute a predetermined operation, and prohibiting the apparatus from executing a predetermined operation. Generating information may include, for example, generating information to be notified to an external computer. Outputting information may include, for example, presenting information to a user and transmitting information to an external computer.

In one example, the geofence may be related to the travel speed of the vehicle MV. The action content may specify executing any action when the travel speed satisfies a predetermined condition. For example, the action content may include issuing a warning to urge a user (driver or the like) to suppress the travel speed when the travel speed exceeds a predetermined value. As a specific example, the geofence may be set in a school zone. The action content may include issuing a warning to urge to reduce the travel speed when the travel speed exceeds 30 km/h in the school zone. The action content may include controlling the operation of the vehicle MV so that the travel speed is suppressed to or below a predetermined value. In addition, for example, the action content may include allowing information to be output when the travel speed is less than the predetermined value. As a specific example, the action content may include allowing (executing) output of advertisement information when the travel speed is less than the predetermined value (including when stopped) and prohibiting (omitting) output of advertisement information when the travel speed exceeds the predetermined value. Cases where the travel speed is equal to the predetermined value may be included in both cases where the travel speed is less than the predetermined value and cases where the travel speed exceeds the predetermined value.

In addition, in one example, the geofence may be related to a travel mode of the vehicle MV. The action content may specify executing any action when the travel mode satisfies a predetermined condition. For example, the vehicle MV may be a hybrid vehicle. Travel modes of a hybrid vehicle may include an electric vehicle mode (EV mode) and a hybrid (electric) vehicle mode (HV/HEV mode). The geofence may be related to a low emission zone. The action content may include at least one of controlling an operating mode of the vehicle MV and outputting information related to the low emission zone. As a specific example, the geofence may be provided in the low emission zone. In this case, when the vehicle MV enters the geofence and the operating mode of the vehicle MV is the hybrid vehicle mode, the action content may include switching the operating mode of the vehicle MV from the hybrid vehicle mode to the electric vehicle mode or outputting a notification to instruct to switch to the electric vehicle mode.

In addition, in one example, the vehicle MV may include a driving recorder. The geofence may be related to a photographing mode of the driving recorder. The action content may specify executing any action related to the photographing mode of the driving recorder. For example, the geofence may be related to prohibiting photography. The action content may include at least one of controlling the photographing mode of the driving recorder to an off state and outputting information related to prohibiting photography. As a specific example, the geofence may be set in an area where photography is prohibited. In this case, when the vehicle MV enters the geofence and the photographing mode of the driving recorder is in an on state, the action content may include outputting a notification to instruct to switch the photographing mode of the driving recorder from the on state to the off state or instruct to switch to the off state.

Note that the action content need not be limited to the examples described above and may be specified as appropriate in accordance with the embodiment. For example, the action content may include notifying an external computer (server or the like) of a movement status of the vehicle MV. The movement status of the vehicle MV may include, for example, approaching a destination, having reached the destination, staying at the destination, and having departed the destination. In one example, the vehicle MV may be a truck delivering a package and the destination may be a delivery destination of the package (such as a store). In addition, for example, when the current state of the vehicle MV satisfies a predetermined condition, the action content may include starting the in-vehicle sensor S and notifying sensing data obtained by the in-vehicle sensor S to an external computer.

In addition, the number of executions of actions specified in the action content may be one or a plurality. When a plurality of actions are defined in the action content, each action may be referred to as a sub-action. The action content may be defined by a combination of a plurality of sub-actions. When the action content is defined by a combination of a plurality of sub-actions, an order of priority of execution may be set to each sub-action. In addition, a dependence relationship of executions may exist between at least a part of the sub-actions such as when whether or not a second sub-action is to be executed or an execution content of the second sub-action is to be determined according to an execution result of a first sub-action.

In addition, the action content may be determined statically in advance or determined dynamically according to predetermined conditions. A dynamic determination of the action content may be performed, for example, based on various conditions such as a time slot, a date, weather, the presence or absence of an event, a state of the user, and a state of an apparatus (in-vehicle apparatus 1, vehicle MV, or the like). As one example, the action content may be defined so that advertisements are output according to time slots (such as outputting an advertisement of a cafe during a morning time slot and outputting an advertisement of a restaurant during a night time slot).

### (B) Action execution condition

An action execution condition is a condition for determining whether or not to execute an action. The action execution condition may be defined as appropriate so as to include a condition related to an event with respect to an object geofence. An event with respect to a geofence may be detected as appropriate according to a result of an inside/outside determination of the geofence. In one simple example, a condition related to an event with respect to a geofence may include at least one of being positioned inside the geofence and being positioned outside the geofence. A transition of a positional relationship with respect to the geofence may be monitored by continuously executing inside/outside determinations of the geofence. Accordingly, in one example, a condition related to an event with respect to the geofence may be detected according to a result of monitoring the transition of the positional relationship with respect to the geofence. For example, an event with respect to the geofence may include at least one of staying outside the geofence, entering the geofence from outside, staying inside the geofence, and exiting the geofence to the outside. Staying inside (outside) the geofence may include at least one of staying inside (outside) the geofence beyond a predetermined time and performing a predetermined movement inside (outside) the geofence.

The action execution condition may further include any condition other than the condition related to an event with respect to the geofence. In one example, the action execution condition may further include a condition related to an execution environment of an action. The execution environment may include any element of the circumstances under which the action is to be executed. For example, the execution environment may include dynamic elements such as a time slot, a date, weather, and the presence or absence of any event. In addition, in one example, the action execution condition may further include a condition related to a state of an apparatus (vehicle MV, in-vehicle apparatus 1, or the like).

When determining whether or not the condition is satisfied, the in-vehicle apparatus 1 may acquire information to be used for the determination as appropriate from any information source. For example, the in-vehicle apparatus 1 may determine whether or not an action execution condition other than conditions related to an event with respect to a geofence is satisfied according to at least one of information held in the in-vehicle apparatus 1 and information acquired from another apparatus connected to the in-vehicle apparatus 1. When the action execution condition includes a condition related to the state of the vehicle MV, the in-vehicle apparatus 1 may acquire vehicle information from the vehicle MV as appropriate. The in-vehicle apparatus 1 may determine whether or not the condition related to the state of the vehicle MV is satisfied according to the vehicle information obtained from the vehicle MV. The vehicle information used to determine satisfiability of the action execution condition and the vehicle information 20 used to determine satisfiability of the determination execution condition described above may be at least partially the same or may differ from each other.

In one example, with respect to a geofence related to a travel speed of the vehicle MV, the action execution condition related to the state of the vehicle MV may include a condition (for example, a threshold or a numerical range) with respect to the travel speed. For example, the action execution condition related to the state of the vehicle MV may include one of the travel speed exceeding the threshold and the travel speed being less than the threshold. When the action execution condition includes the former condition, the in-vehicle apparatus 1 may determine that the action execution condition is not satisfied in response to the travel speed being less than the threshold and may omit the execution of the action (notification of warning or the like). In addition, when the action execution condition includes the latter condition, the in-vehicle apparatus 1 may determine that the action execution condition is not satisfied in response to the travel speed exceeding the threshold and may omit the execution of the action (output of advertisement information or the like).

In addition, in one example, with respect to a geofence related to a low emission zone, the action execution condition related to the state of the vehicle MV may include the vehicle MV being in a mode other than the electric vehicle mode (for example, hybrid vehicle mode). Accordingly, when the vehicle MV is in the electric vehicle mode even before entering the geofence, the in-vehicle apparatus 1 may determine that the action execution condition is not satisfied and may omit execution of an action to switch the operating mode of the vehicle MV to the electric vehicle mode.

In addition, in one example, with respect to a geofence related to the photographing mode of the driving recorder, the action execution condition related to the state of the vehicle MV may include the photographing mode of the driving recorder being in an on state (in other words, the driving recorder is in operation). Accordingly, when the photographing mode of the driving recorder is in the off state (when the driving recorder is stopped) even before entering the geofence, the in-vehicle apparatus 1 may determine that the action execution condition is not satisfied and may omit execution of an action to switch the photographing mode of the driving recorder to the off state (prohibit photography).

In addition, in one example, the action execution condition related to the state of the vehicle MV may include an utterance by an application other than an application of an action to be executed not being executed in the in-vehicle apparatus 1. Accordingly, when an utterance by the other application is being executed, the in-vehicle apparatus 1 may determine that the action execution condition is not satisfied and may omit execution of the action. In response to the termination of the utterance by the other application, the in-vehicle apparatus 1 may determine that the action execution condition is satisfied and may execute the action defined in the action content.

Note that once the action execution condition is satisfied, the action defined in the action content may be executed at any timing. In one example, the action may be executed immediately upon fulfillment of the action execution condition or may be executed after a predetermined delay time has elapsed. In addition, the number of the action to be executed in response to the fulfillment of the action execution condition need not be particularly limited and may be determined as appropriate in accordance with the embodiment. In one example, the action may be executed only once or may be repeatedly executed under predetermined conditions.

One or more conditions may be defined in the action execution condition. The action execution condition may be constituted of a combination of a plurality of conditions. When the action execution condition is constituted of a combination of a plurality of conditions, the action execution condition may be determined to be satisfied upon the fulfillment of any condition included in the action execution condition. In one example, the action execution condition may be determined to be satisfied upon the fulfillment of any condition or the fulfillment of all of at least two or more conditions. An order of priority may be set to each condition. The order of priority may be set statically or set dynamically according to the execution environment or the like. In this case, determination processing of each condition may be executed according to the order of priority. The action execution condition may be referred to as a trigger event.

### (Map)

A map (map data) can be given as appropriate. The map data may be configured as appropriate to show a map. A known configuration may be adopted as a configuration of the map data. In one example, the map data may be configured to include coordinate information of latitude and longitude, road network information, facility information, and the like. Road network information may include an ID (road link ID) of each road (road link). The map data may be held in any storage area. The map data may be stored in at least one of a memory resource of the in-vehicle apparatus 1 and an external main memory. The external main memory may include a main memory of an external computer such as a network attached storage (NAS).

In the in-vehicle apparatus 1, the map data may be used for any purpose such as displaying a designated area or a designated location or route guidance. When the map data is not held in advance and the map data is to be used for any purpose, the in-vehicle apparatus 1 may acquire at least data of a range to be used in the map data as appropriate from the external main memory. A known method may be adopted as the method of acquiring the map data. In the in-vehicle apparatus 1, determination processing of a geofence may be executed in conjunction with processing of using the map data or may be executed independently of the processing of using the map data.

### [Determination execution condition]

The determination execution condition is a condition for selecting whether or not to execute determination processing of a geofence. While the action execution condition described above specifies whether or not to execute an action according to a result of an inside/outside determination of a geofence or the like after executing the inside/outside determination, the determination execution condition specifies whether or not to execute the inside/outside determination of the geofence in the first place.

In the present embodiment, the determination execution condition may include a condition related to a state of the vehicle MV. The determination execution condition may include conditions other than the condition related to the state of the vehicle MV or may be solely constituted of the condition related to the state of the vehicle MV without including such other conditions. The determination execution condition may be specified as appropriate for each geofence. In one example of the present embodiment, the determination execution condition may include at least one of the three conditions described below.

### (1) Travel speed

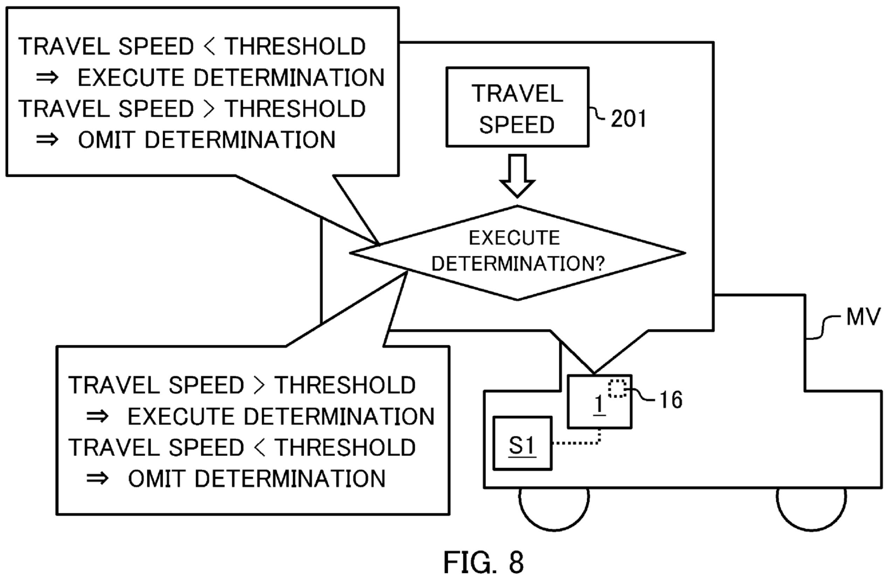

Fig. 8 schematically illustrates an example of a determination execution condition (travel speed) according to the present embodiment. In one example, the geofence may be related to the travel speed of the vehicle MV. The in-vehicle apparatus 1 may acquire a current travel speed 201 of the vehicle MV as an example of the vehicle information 20. In other words, the current state of the vehicle MV as indicated by the vehicle information 20 may include the travel speed 201 of the vehicle MV. The determination execution condition may be that the travel speed of the vehicle MV satisfies a predetermined numerical condition. Accordingly, the in-vehicle apparatus 1 may select whether or not to execute a determination of a geofence according to whether or not the acquired travel speed 201 satisfies the predetermined numerical condition. When the travel speed 201 satisfies the predetermined numerical condition, the in-vehicle apparatus 1 may select to execute the determination of the geofence. On the other hand, when the travel speed 201 does not satisfy the predetermined numerical condition, the in-vehicle apparatus 1 may select not to execute the determination of the geofence.

A method of measuring the travel speed 201 need not be particularly limited and may be selected as appropriate in accordance with the embodiment. In one example, the in-vehicle sensor S may include a vehicle speed sensor S1. The in-vehicle apparatus 1 may acquire the travel speed 201 directly or indirectly from the vehicle speed sensor S1. In another example, a position of the vehicle MV may be continuously measured by the positioning module 16. The travel speed 201 may be measured from a result of the continuous measurement as an amount of change in the position of the vehicle MV. According to one example of the present embodiment, an improvement in efficiency of the determination processing of a geofence can be expected with respect to a geofence that monitors the travel speed of the vehicle MV.

Note that the predetermined numerical condition may be determined as appropriate in accordance with the embodiment. In one example, the predetermined numerical condition may be constituted of the travel speed 201 of the vehicle MV exceeding a threshold. In other words, selecting whether or not to execute the determination of a geofence may include selecting to execute the determination of a geofence when the travel speed 201 of the vehicle MV exceeds the threshold and selecting not to execute the determination of a geofence when the travel speed 201 of the vehicle MV is less than the threshold. The threshold may be arbitrarily specified. Cases where the travel speed 201 is equal to the threshold may be included in both cases where the travel speed 201 exceeds the threshold and cases where the travel speed 201 is less than the threshold. In one example, the numerical condition may be used in situations where a geofence for urging suppression of the travel speed is set such as issuing a warning with respect to travel at a speed exceeding 30 km/h in a school zone. Output information such as the warning to be issued may be held in a memory resource (for example, in a program) as appropriate. The output information may be supplied from an external main memory. According to one example of the present embodiment, an improvement in efficiency of the determination processing of a geofence can be expected with respect to a geofence that monitors travel at speeds exceeding a threshold.

In another example, the predetermined numerical condition may be constituted of the travel speed 201 of the vehicle MV being less than a threshold. In other words, selecting whether or not to execute the determination of a geofence may include selecting to execute the determination of a geofence when the travel speed 201 of the vehicle MV is less than the threshold and selecting not to execute the determination of a geofence when the travel speed 201 of the vehicle MV exceeds the threshold. In a similar manner to the above, the threshold may be arbitrarily specified. Cases where the travel speed 201 is equal to the threshold may be included in both cases where the travel speed 201 is less than the threshold and cases where the travel speed 201 exceeds the threshold. The travel speed 201 being less than the threshold may include the vehicle MV being stopped. In one example, the numerical condition may be used in situations where allowing or prohibiting output of information is to be controlled according to the travel speed such as when allowing output of advertisement information when the travel speed is less than a predetermined value and prohibiting output of the advertisement information when the travel speed exceeds a predetermined value. Output information such as the advertisement information may be held in a memory resource as appropriate. The output information may be supplied from an external main memory. According to one example of the present embodiment, an improvement in efficiency of the determination processing of a geofence can be expected with respect to a geofence that monitors travel at speeds less than a threshold.

### (2) Travel mode

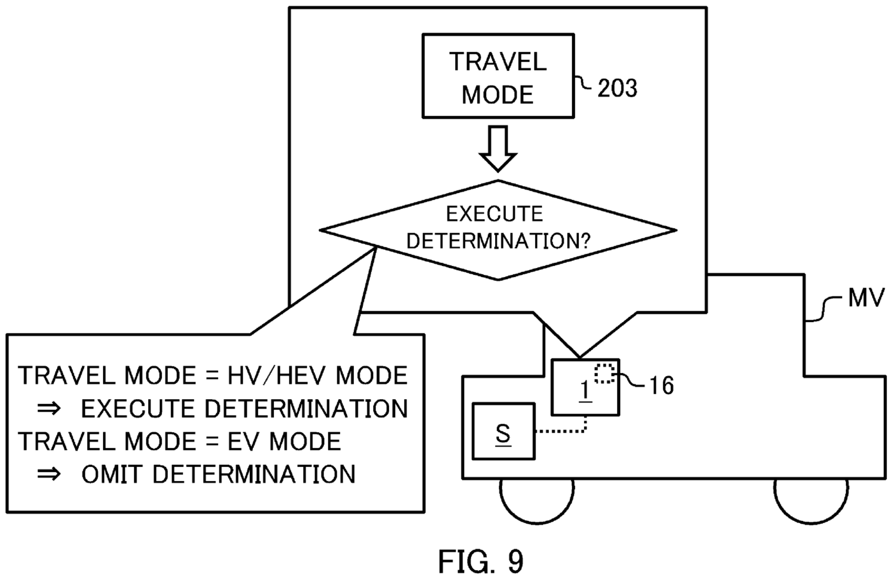

Fig. 9 schematically illustrates an example of a determination execution condition (travel mode) according to the present embodiment. In one example, the geofence may be related to a travel mode of the vehicle MV. The in-vehicle apparatus 1 may acquire information indicating a current travel mode 203 of the vehicle MV as an example of the vehicle information 20. In other words, the current state of the vehicle MV as indicated by the vehicle information 20 may include the current travel mode 203 of the vehicle MV. The determination execution condition may be that the travel mode of the vehicle MV satisfies a predetermined condition. Accordingly, the in-vehicle apparatus 1 may select whether or not to execute a determination of a geofence according to whether or not the acquired travel mode 203 satisfies the predetermined condition. When the travel mode 203 satisfies the predetermined condition, the in-vehicle apparatus 1 may select to execute the determination of the geofence. On the other hand, when the travel mode 203 does not satisfy the predetermined condition, the in-vehicle apparatus 1 may select not to execute the determination of the geofence.

The information indicating the travel mode 203 may be acquired by any method. In one example, when the in-vehicle apparatus 1 constitutes at least a part of the vehicle MV, the in-vehicle apparatus 1 may acquire the information indicating the travel mode 203 from the memory resource of the in-vehicle apparatus 1. In another example, when the in-vehicle apparatus 1 is connected to a computer of the vehicle MV, the in-vehicle apparatus 1 may acquire the information indicating the travel mode 203 from the computer (such as an ECU) of the vehicle MV. According to one example of the present embodiment, an improvement in efficiency of the determination processing of a geofence can be expected with respect to a geofence that monitors the travel mode of the vehicle MV.

Note that the travel mode (travel mode 203) may specify as appropriate, for example, a travel system of the vehicle (vehicle MV) such as traveling on electric power of a battery or traveling on fuel. A type of the travel mode need not be particularly limited and may be determined as appropriate in accordance with the embodiment such as a type of the vehicle. Accordingly, the predetermined condition may also be determined as appropriate in accordance with the embodiment. In one example, as described above, the vehicle MV may be a hybrid vehicle. Travel modes of the hybrid vehicle may include an electric vehicle mode and a hybrid vehicle mode. The electric vehicle mode may be a mode in which electric power is supplied from the battery and the vehicle is driven only by an electric motor. The hybrid vehicle mode may be a mode in which power is supplied from fuel and the battery and the vehicle is driven by both an engine and an electric motor. The geofence may be related to a low emission zone. The predetermined condition with respect to the travel mode may be constituted of the current travel mode 203 of the vehicle MV being a mode other than the electric vehicle mode (such as the hybrid vehicle mode). In other words, selecting whether or not to execute the determination of a geofence may include selecting to execute the determination of a geofence when the current travel mode 203 of the vehicle MV is a mode other than the electric vehicle mode and selecting not to execute the determination of a geofence when the current travel mode 203 of the vehicle MV is the electric vehicle mode. The mode other than the electric vehicle mode may be, for example, the hybrid vehicle mode (HV/HEV mode). In one example, the predetermined condition may be used in situations where a geofence for urging travel in the electric vehicle mode in the low emission zone is set such as switching the operating mode of the vehicle MV to the electric vehicle mode or outputting a notification to instruct to switch to the electric vehicle mode in the low emission zone. According to one example of the present embodiment, an improvement in efficiency of the determination processing of a geofence can be expected with respect to a geofence that monitors the travel mode of the vehicle MV in a low emission zone.

### (3) Photographing mode of driving recorder

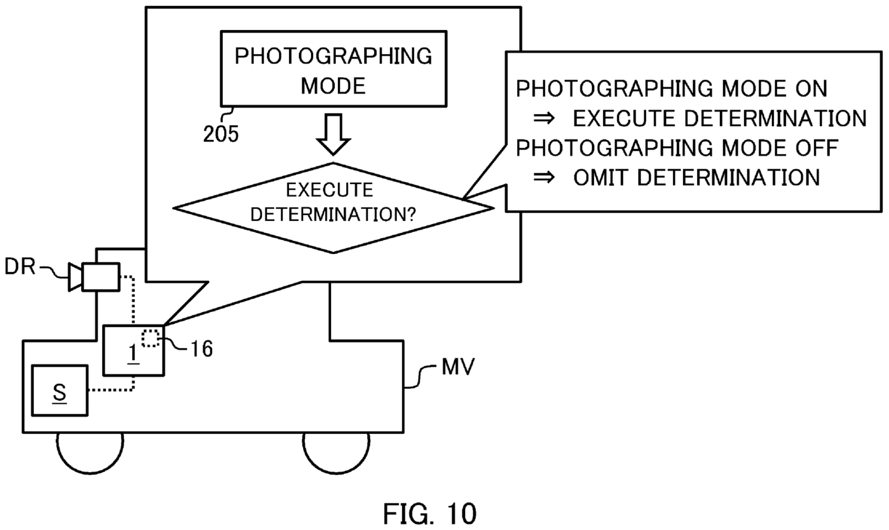

Fig. 10 schematically illustrates an example of a determination execution condition (photographing mode of driving recorder) according to the present embodiment. In one example, the vehicle MV may include a driving recorder DR. As long as a travel state of the vehicle MV (in particular, a state outside of the vehicle MV) can be recorded, a type of the driving recorder DR need not be particularly limited and may be selected as appropriate in accordance with the embodiment. For example, the driving recorder DR may be a video recording apparatus such as a video camera. The in-vehicle apparatus 1 may be directly connected to the driving recorder DR or indirectly connected via a network (such as a controller area network), a computer of the vehicle MV, or the like. The geofence may be related to the photographing mode of the driving recorder DR. The in-vehicle apparatus 1 may acquire information indicating a current photographing mode 205 of the driving recorder DR as an example of the vehicle information 20. In other words, the current state of the vehicle MV as indicated by the vehicle information 20 may include the current photographing mode 205 of the driving recorder DR. The determination execution condition may be that the photographing mode of the driving recorder DR satisfies a predetermined condition. Accordingly, the in-vehicle apparatus 1 may select whether or not to execute a determination of a geofence according to whether or not the acquired photographing mode 205 satisfies the predetermined condition. When the photographing mode 205 satisfies the predetermined condition, the in-vehicle apparatus 1 may select to execute the determination of a geofence. On the other hand, when the photographing mode 205 does not satisfy the predetermined condition, the in-vehicle apparatus 1 may select not to execute the determination of a geofence.

The information indicating the photographing mode 205 may be acquired by any method. In one example, when the in-vehicle apparatus 1 constitutes at least a part of the vehicle MV or the in-vehicle apparatus 1 is directly connected to the driving recorder DR, the in-vehicle apparatus 1 may acquire the information indicating the photographing mode 205 from the memory resource of the in-vehicle apparatus 1. In another example, when the in-vehicle apparatus 1 is connected to a computer of the vehicle MV or indirectly connected to the driving recorder DR, the in-vehicle apparatus 1 may acquire the information indicating the photographing mode 205 from a component (such as an ECU) of the vehicle MV. According to one example of the present embodiment, an improvement in efficiency of the determination processing of a geofence can be expected with respect to a geofence that monitors the photographing mode of the driving recorder DR.

Note that the photographing mode (photographing mode 205) may specify an operating system of the driving recorder (driving recorder DR) as appropriate such as continuously record or stop recording. A type of the photographing mode may be selected as appropriate in accordance with the embodiment. Accordingly, the predetermined condition may also be determined as appropriate in accordance with the embodiment. In one example, the photographing mode of the driving recorder DR may include a first mode of executing continuous recording (photographing mode is in on state) and a second mode of stopping the execution of recording (photographing mode is in off state). The geofence may be related to prohibiting photography by the driving recorder DR. The predetermined condition with respect to the photographing mode may be constituted of the current photographing mode 205 of the driving recorder DR being in an on state (first mode). In other words, selecting whether or not to execute the determination of a geofence may include selecting to execute the determination of a geofence when the current photographing mode 205 of the driving recorder DR is in the on state and selecting not to execute the determination of a geofence when the current photographing mode 205 of the driving recorder DR is in the off state (second mode). In one example, the predetermined condition may be used in situations where an operation of the driving recorder DR is controlled (photographing is prohibited) in the no photographing area described above. According to one example of the present embodiment, an improvement in efficiency of the determination processing of a geofence can be expected with respect to a geofence that monitors the photographing mode of the driving recorder DR in the no photographing area.

(Relationship with action execution condition) The determination execution condition and the action execution condition can overlap. In one example, determination items of the determination execution condition and the action execution condition may at least partially overlap. Due to the conditions for overlapping determination items being the same, the determination execution condition and the action execution condition may at least partially overlap. Accordingly, the same conditions may be repeatedly determined as the determination execution condition and the action execution condition.

In addition, when at least partially overlapping conditions can be set between the determination execution condition and the action execution condition, the conditions that can overlap may be omitted from one of the determination execution condition and the action execution condition. For example, the conditions that can overlap may be set as the determination execution condition and need not be set as the action execution condition (in other words, may be omitted from the action execution condition). As a specific example, the condition related to the low emission zone described above (the travel mode 203 of the vehicle MV being a mode other than the electric vehicle mode) may be set as the determination execution condition and may be omitted from the action execution condition. In addition, the condition related to the photographing mode described above (the photographing mode 205 of the driving recorder DR being in the on state) may be set as the determination execution condition and may be omitted from the action execution condition.

In addition, when setting overlapping determination items in the determination execution condition and the action execution condition, conditions with respect to determination items (threshold conditions and the like) may be set as appropriate in accordance with the embodiment. Conditions with respect to overlapping determination items may differ between the determination execution condition and the action execution condition. In this case, in one example, the determination execution condition may be set to be easier to satisfy (easier to be selected for execution) than the action execution condition with respect to the overlapping determination items.

As a specific example, in the case described above in which an action is executed when the travel speed exceeds a predetermined value, the threshold of the determination execution condition (first threshold) may be set to a smaller value than the threshold of the action execution condition (second threshold). For example, in the case of the school zone described above, the threshold of the action execution condition may be set to a speed of 30 km/h and the threshold of the determination execution condition may be set to a slower speed (such as a speed of 20 km/h) than 30 km/h. In addition, as a specific example, in the case described above in which an action is executed when the travel speed is less than a predetermined value, the threshold of the determination execution condition (first threshold) may be set to a larger value than the threshold of the action execution condition (second threshold). For example, in the case of the output control of advertisement information described above, the threshold of the determination execution condition may be set to a higher speed than the threshold of the action execution condition.

A timing at which a determination of the determination execution condition is executed can differ from a timing at which a determination of the action execution condition is executed. Determination processing of the determination execution condition may be executed before the action execution condition. When the timing at which the determination of the determination execution condition is executed greatly deviates from the timing at which the determination of the action execution condition is executed, a state of the vehicle MV may possibly vary between a time point of execution of the determination of the determination execution condition and a time point of execution of the determination of the action execution condition. Due to variations in the state of the vehicle MV, a situation may occur in which the state of the vehicle MV does not satisfy the action execution condition at a time point of executing the determination processing of the determination execution condition but the state of the vehicle MV satisfies the action execution condition at a time point of executing the determination processing of the action execution condition. In such a case, there is a possibility that the determination processing of the action execution condition is omitted even though the state of the vehicle MV satisfies the action execution condition and, accordingly, the execution of the action is omitted. According to one example of the present embodiment, due to the determination execution condition being set to be easier to satisfy than the action execution condition, a situation where the determination processing of the action execution condition is omitted (accordingly, the execution of the action is omitted) despite the state of the vehicle MV being capable of satisfying the action execution condition can be suppressed.

### (Other)

Note that the determination execution condition need not be limited to the example described above and may be set as appropriate in accordance with the embodiment. The determination execution condition may be set with respect to static information or may be set with respect to dynamic information such as the execution environment described earlier. For example, the static information may include a type of the vehicle MV (vehicle type) and an attribute of a user. For example, the attribute of a user may include an age, gender, and the like of the user. In addition, in one example, the determination execution condition may include a hysteresis condition that specifies that after executing the inside/outside determination, a dead zone (hysteresis) of a predetermined distance is set and processing of the inside/outside determination is not performed once again until a movement over the distance is performed. With the determination execution condition including the hysteresis condition, frequent execution of determination processing near a boundary of the geofence can be suppressed.

### [Geofence definition data]

As long as the geofence definition data 30 is configured so as to define a geofence (geometry and action), a configuration thereof need not be particularly limited and may be determined as appropriate in accordance with the embodiment. In one example, the geofence definition data 30 may be configured to include both information on a geometry and information on an action.

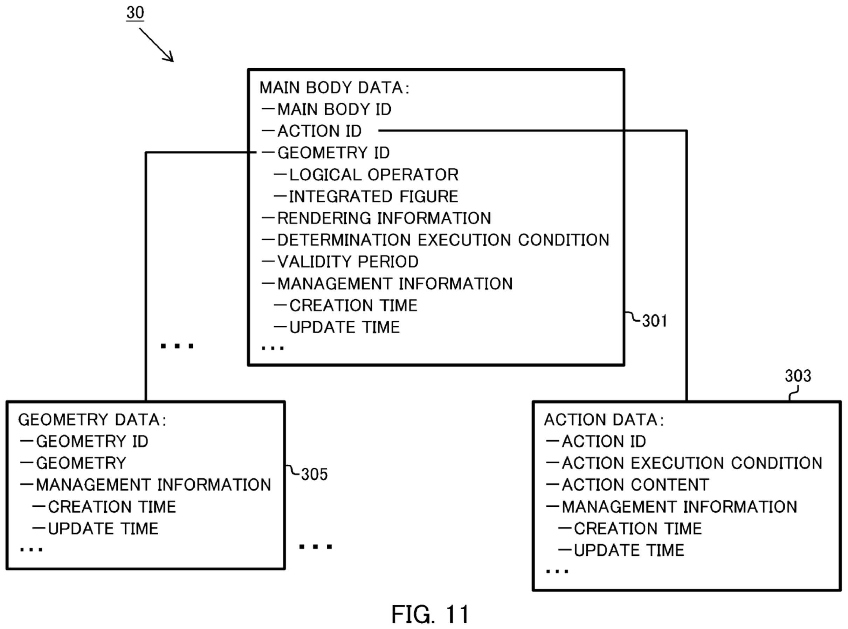

Fig. 11 schematically illustrates an example of a configuration of the geofence definition data 30 according to the present embodiment. In one example, the geofence definition data 30 may include action data 303 that specifies an action in a geofence and main body data 301 that includes identification information (action ID) of the action data 303. Due to the main body data 301 including the identification information of the action data 303, the action data 303 is associated with the main body data 301. As the number of geofences increases, a data volume of the geofence definition data 30 may grow. In contrast, in one example of the present embodiment, the geofence definition data 30 is divided into the main body data 301 and the action data 303. In other words, the action data 303 is separated from the main body data 301. Accordingly, the action data 303 is configured to be reusable. In other words, by associating the action data 303 with another piece of main body data, a same action specified by the action data 303 can also be set for another geofence. Therefore, according to one example of the present disclosure, since duplication of data with respect to the definition of a same action can be suppressed, a reduction in data volume with respect to the geofence definition data 30 can be achieved. The reduction in data volume can be facilitated by increasing a reutilization rate.

In addition, in one example, the geofence definition data 30 may further include geometry data 305 that specifies a geometry that demarcates an area of a geofence. The main body data 301 may further include identification information (geometry ID) of the geometry data 305. Due to the main body data 301 including the identification information of the geometry data 305, the geometry data 305 is associated with the main body data 301. In one example of the present embodiment, the geometry data 305 is also separated from the main body data 301 in a similar manner to the action data 303. Accordingly, the geometry data 305 is also configured to be reusable. In other words, by associating the geometry data 305 with another piece of main body data, a same area definition (geometry) specified by the geometry data 305 can also be applied to another geofence. Therefore, according to one example of the present embodiment, when setting a plurality of geofences to a same area, duplication of data with respect to the same area definition can be suppressed. Consequently, a reduction in data volume with respect to the geofence definition data 30 can be achieved.

### (Main body data)

The main body data 301 may be configured as appropriate so as to indicate a geofence. In one example, by including the identification information (action ID and geometry ID) of the action data 303 and the geometry data 305, the main body data 301 may be configured to indicate a definition of the geofence together with the associated action data 303 and the associated geometry data 305. As illustrated in Fig. 11, in one example of the present embodiment, the main body data 301 may include fields for storing various kinds of information such as a main body ID, an action ID, a geometry ID, rendering information, a determination execution condition, a validity period, and management information. An order of the respective fields need not be particularly limited and may be modified as appropriate in accordance with the embodiment. In one example, one piece of main body data 301 may correspond to one geofence.

The main body ID may be used to identify a geofence. The main body ID is an example of identification information of the main body data 301. A data format of the identification information (main body ID) need not be particularly limited and may be determined as appropriate in accordance with the embodiment. A value of the main body ID may be given according to the time at which the geofence was registered by creation of the main body data 301. The time may include a year, a month, and a day. An object unit of the time may be selected arbitrarily. Accordingly, the main body ID may be configured so that a registration order can be determined based on the value of the main body ID.

The action ID is used to identify an action (action data 303) to be applied to the geofence. The action ID is an example of identification information of the action data 303. A data format of the identification information (action ID) of the action need not be particularly limited and may be determined as appropriate in accordance with the embodiment. As illustrated in Fig. 11, in one example of the present embodiment, due to the main body data 301 including an action ID, the action data 303 identified by the action ID may be linked with the main body data 301.

The geometry ID is used to identify a geometry (geometry data 305) to be applied to the geofence. The geometry ID is an example of identification information of the geometry data 305. A data format of the identification information (geometry ID) of the geometry need not be particularly limited and may be determined as appropriate in accordance with the embodiment. As illustrated in Fig. 11, in one example of the present embodiment, due to the main body data 301 including a geometry ID, the geometry data 305 identified by the geometry ID may be linked with the main body data 301.

Here, as described above, in one example, an area of a geofence may be demarcated by one geometry or demarcated by a plurality of geometries (Figs. 5 to 7). Accordingly, including the identification information of the geometry data 305 may be constituted of including the identification information of the geometry data 305 of each of one or more geometries. When including the identification information of the geometry data 305 of each of a plurality of geometries, the main body data 301 may further include a logical operator to be used to integrate the plurality of geometries.

In the example in Fig. 11, one or more geometry IDs may be stored in the geometry ID field of the main body data 301. Accordingly, one or more pieces of geometry data 305 may be linked with the main body data 301. With the main body data 301 including a plurality of geometry IDs, a plurality of geometries may be linked with the main body data 301 and used to demarcate an area of the geofence to be defined. In addition, the main body data 301 may further include a field for storing a logical operator. When the main body data 301 includes a plurality of geometry IDs, the field may store the logical operator used when integrating the geometries corresponding to the respective geometry IDs. Accordingly, the main body data 301 may include a logical operator used when integrating the respective linked geometries.

According to an example of the present embodiment, an area of a geofence can be demarcated using a plurality of pieces of geometry data 305 (plurality of geometries). Accordingly, since reusability of the geometry data 305 can be further improved, a further reduction in data volume can be expected. Furthermore, in addition to simple area definitions according to a single geometry, complex area definitions can be easily generated by a combination of a plurality of geometries.

In one example, as illustrated in Fig. 11, when the integration of a plurality of geometries is allowed, the main body data 301 may further include a field for storing an integrated figure that is formed by integrating the plurality of geometries by a logical operator. Accordingly, when including the geometry ID of the geometry data 305 of each of the plurality of geometries, the main body data 301 may further include an integrated figure that is formed by integrating the plurality of geometries. The integrated figure may be used for any purpose such as distance calculation. According to one example of the present embodiment, with the main body data 301 including an integrated figure, a calculation to integrate geometries each time a geofence is used need no longer be executed. As a result, an improvement in efficiency of processing can be expected.

The rendering information is used to render a geofence on a map. In one example of the present embodiment, with the main body data 301 including a field for storing the rendering information, the main body data 301 may further include rendering information for rendering a geofence on a map in the in-vehicle apparatus 1. As described above, in the in-vehicle apparatus 1, a map may be used for any purpose such as displaying a designated area or a designated location or route guidance. Map data may be used to render a map. The rendering information may include any information to be used to render a geofence on a map. For example, the rendering information may include information such as a representative point (coordinates or the like), a name, and rendering attributes. The rendering attributes may include whether or not to display a geofence, a fill color, a border color, transparency, icon attributes, and the like. The icon attributes may include whether or not to display an icon, content information (storage destination of icon image or the like), and the like. The representative point may be used as a point where an icon is to be displayed. According to one example of the present embodiment, compared to the geometry data 305 that specifies a geometry being separated from the main body data 301, the rendering information is retained in the main body data 301. Accordingly, in the in-vehicle apparatus 1, even without referring to the geometry data 305, a geofence can be rendered by referring to the rendering information in the main body data 301. As a result, an improvement in efficiently of processing for rendering a geofence can be expected.

As described above, the determination execution condition is used to select whether or not to execute determination processing of a geofence. In one example of the present embodiment, with the main body data 301 including a field for storing the determination execution condition, the main body data 301 may further include a determination execution condition for selecting whether or not to execute a determination of a geofence. According to one example of the present embodiment, even without referring to the action data 303 (and geometry data 305), whether or not to execute determination of a geofence can be determined by referring to the determination execution condition in the main body data 301. As a result, an improvement in efficiency of determination processing of a geofence can be expected.

The validity period indicates a time limit for which the geofence defined by the geofence definition data 30 is valid. In one example of the present embodiment, with the main body data 301 including a field for storing the validity period, the main body data 301 may further include a validity period of a geofence. According to one example of the present embodiment, a period during which a geofence is to be applied can be designated by the validity period included in the main body data 301. In addition, even without referring to the action data 303 and the geometry data 305, whether or not the geofence is valid can be determined by referring to the validity period in the main body data 301. As a result, an improvement in efficiency of processing of verifying a validity of a geofence can be expected.

The management information may include any information to be used in the operation of the main body data 301. In one example, the management information may include a creation time, an update time, and the like. The times may include a year, a month, and a day. An object unit of the time may be selected arbitrarily. The creation time may indicate the time at which the main body data 301 was created. The update time may indicate the time at which the geofence definition data 30 was updated. In one example, the update time may be configured to indicate the time at which at least one of the main body data 301, the associated action data 303, and the associated geometry data 305 was updated. Accordingly, in one example of the present embodiment, the main body data 301 may further include an overall update time that indicates the time at which at least one of the main body data 301, the action data 303, and the geometry data 305 was updated. According to one example of the present embodiment, consolidating the update times in the main body data 301 enables whether or not at least one of the main body data 301, the action data 303, and the geometry data 305 has been updated to be determined simply by referring to the main body data 301 without referring to the action data 303 and the geometry data 305. As a result, an improvement in efficiency of processing when determining the presence or absence of an update of the geofence definition data 30 can be expected. However, the update times included in the main body data 301 need not be limited to such an example and may be modified as appropriate in accordance with the embodiment. In another example, the update time may be configured to indicate the time at which the main body data 301 was updated without indicating the times at which the action data 303 and the geometry data 305 were updated. In yet another example, the main body data 301 may separately include an overall update time and an individual update time of the main body data 301.

With respect to the specific configuration of the main body data 301, components can be omitted, replaced, or added as appropriate in accordance with the embodiment. For example, at least one of the logical operator, the integrated figure, the rendering information, the determination execution condition, the validity period, and the management information may be omitted. The rendering information, the determination execution condition, and the validity period may be held in at least one of the action data 303 and the geometry data 305. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the main body data 301 may further include other information such as a category of the action, whether or not to be made public, and a type of the in-vehicle apparatus 1 that is an object to which geofence definition data is to be provided.

### (Action data)

By including definition information of an action, the action data 303 may be configured as appropriate to indicate the defined action. As illustrated in Fig. 11, in one example of the present embodiment, the action data 303 may include fields for storing various kinds of information such as an action ID, an action execution condition, an action content, and management information. An order of the respective fields need not be particularly limited and may be modified as appropriate in accordance with the embodiment. In one example, one piece of action data 303 may correspond to one action definition.

The action ID is used to identify the action data 303. The action execution condition specifies a condition under which an action is to be executed. The action content specifies a content of the action to be executed. The action execution condition and the action content may respectively be defined as described above. The action execution condition and the action content are examples of definition information of an action. The management information may include any information to be used in the operation of the action data 303. The management information of the action data 303 may be configured in a similar manner to the management information of the main body data 301 with the exception of the action data 303 replacing the main body data 301 as an object. In one example, the management information may include a creation time, an update time, and the like. The creation time may indicate the time at which the action data 303 was created. The update time may indicate the time at which the action data 303 was updated.

With respect to the specific configuration of the action data 303, components can be omitted, replaced, or added as appropriate in accordance with the embodiment. For example, the management information may be omitted. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the action data 303 may further include other information such as a category of the action and a name.

### (Geometry data)

By including definition information of a geometry (information that demarcates an area), the geometry data 305 may be configured as appropriate to indicate the defined geometry. As illustrated in Fig. 11, in one example of the present embodiment, the geometry data 305 may include fields for storing various kinds of information such as a geometry ID, a geometry (definition information), and management information. An order of the respective fields need not be particularly limited and may be modified as appropriate in accordance with the embodiment. In one example, one piece of geometry data 305 may correspond to one geometry definition.

The geometry ID is used to identify the geometry data 305. The geometry (definition information) demarcates an area of the geofence. In one example, the geometry may be defined by the method described above such as a circle (Fig. 2), a polygon (Fig. 3), or a link (Fig. 4). The management information may include any information to be used in the operation of the geometry data 305. The management information of the geometry data 305 may be configured in a similar manner to the management information of the main body data 301 with the exception of the object being replaced. In one example, the management information may include a creation time, an update time, and the like. The creation time may indicate the time at which the geometry data 305 was created. The update time may indicate the time at which the geometry data 305 was updated.

With respect to the specific configuration of the geometry data 305, components can be omitted, replaced, or added as appropriate in accordance with the embodiment. For example, the management information may be omitted. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the geometry data 305 may further include other information such as a category of the action and a name.

### (Example of reference procedure during inside/outside determination)

Each field of the geofence definition data 30 (main body data 301, action data 303, and geometry data 305) may be referenced as appropriate when executing the determination processing of a geofence in the in-vehicle apparatus 1.

As one example, in a first step, the in-vehicle apparatus 1 may determine whether or not the determination execution condition of the main body data 301 is satisfied. In one example of the present embodiment, a condition related to the state of the vehicle MV may be designated in a determination execution condition field of the main body data 301. Accordingly, the in-vehicle apparatus 1 may determine whether or not the determination execution condition is satisfied (in other words, whether or not to execute determination processing of a geofence) according to the acquired vehicle information 20 (current state of vehicle MV).

In a second step, with respect to a geofence determined to satisfy the determination execution condition, the in-vehicle apparatus 1 may reference the geometry ID (identification information) of the main body data 301 and access the geometry data 305 linked with the main body data 301. The in-vehicle apparatus 1 may reference the geometry of the geometry data 305 and determine whether the current position 25 is inside or outside an area demarcated by the geometry. In one example of the present embodiment, this determination processing corresponds to the determination (inside/outside determination) of a geofence. When the determination processing of a geofence is being continuously executed, the determination of a geofence may include determining a transition state of the vehicle MV with respect to the geofence.

In one example, when a plurality of pieces of geometry data 305 are linked with the main body data 301, the in-vehicle apparatus 1 may specify an area of a geofence by integrating the respective geometries of the plurality of pieces of geometry data 305 with a logical operator of the main body data 301. In addition, in one example, when information on the area demarcated after the integration of the plurality of geometries is stored in the main body data 301 as an integrated figure, the in-vehicle apparatus 1 may omit accessing the geometry data 305 and the like. In other words, the in-vehicle apparatus 1 may specify the area after integration by referencing the integrated figure of the main body data 301. In addition, the in-vehicle apparatus 1 may determine whether the current position 25 is inside or outside the specified area.

In a third step, the in-vehicle apparatus 1 may reference the action ID (identification information) of the main body data 301 and access the action data 303 linked with the main body data 301. In addition, the in-vehicle apparatus 1 may determine whether or not the action execution condition of the action data 303 is satisfied. In a fourth step, with respect to a geofence determined to satisfy the action execution condition, the in-vehicle apparatus 1 may execute the action specified by the action content of the action data 303.

### (Acquisition route of geofence definition data)

The in-vehicle apparatus 1 may acquire the geofence definition data 30 of each geofence as appropriate. In one example, the geofence definition data 30 may be incorporated in the memory resource of the in-vehicle apparatus 1 in advance. In another example, the in-vehicle apparatus 1 may acquire the geofence definition data 30 from an external main memory such as a server as appropriate. For example, the in-vehicle apparatus 1 may collectively acquire pooled geofence definition data 30 from the external main memory. In addition, for example, the geofence definition data may be held by a database. A server may be configured to be capable of accessing the database. The database may be stored in a memory resource of the server or stored in an external main memory that can be accessed by the server. The in-vehicle apparatus 1 may notify a current position to the server and request the server to provide the geofence definition data 30. The server may extract a geofence that exists within a predetermined distance from the current position. The predetermined distance may be arbitrarily specified. The server may provide the in-vehicle apparatus 1 with the geofence definition data 30 of the extracted geofence. Accordingly, the in-vehicle apparatus may acquire the geofence definition data 30.

### (Other)

Note that a data format of the geofence definition data 30 need not be particularly limited and may be selected as appropriate in accordance with the embodiment. In addition, a data structure of the geofence definition data 30 (main body data 301, action data 303, and geometry data 305) may be modified as appropriate in accordance with the embodiment.

For example, in one example in Fig. 11, the action data 303 and the geometry data 305 are separated from the main body data 301. However, the configuration of the geofence definition data 30 need not be limited to such an example. In another example, only one of the action data 303 and the geometry data 305 may be separated from the main body data 301 and the other may be included (incorporated) in the main body data 301. For example, only the action data 303 may be separated from the main body data 301 and the geometry data 305 may be included in the main body data 301. Only the geometry data 305 may be separated from the main body data 301 and the action data 303 may be included in the main body data 301. In yet another example, when reusability of actions and geometries is not ensured, both the action data 303 and the geometry data 305 may be included in the main body data 301.

In addition, the in-vehicle apparatus 1 may be configured to execute the determination processing of each of a plurality of geofences by holding the geofence definition data 30 of each geofence. In one example of the present embodiment, as long as a plurality of geofences includes one or more geofences for which satisfiability of the determination execution condition (in other words, whether or not to execute a determination is selected) is determined according to the vehicle information 20, the plurality of geofences may include at least one of a geofence for which the determination of satisfiability of the determination execution condition is determined according to information other than the vehicle information 20 and a geofence for which the determination of the determination execution condition is omitted. The geofence definition data 30 held in the in-vehicle apparatus 1 may include the geofence definition data of such geofences. In addition, in a geofence for which satisfiability of the determination execution condition is determined according to the vehicle information 20, an action involved in the state of the vehicle MV (such as the examples in Figs. 8 to 10 described above) may be set. The determination execution condition according to the vehicle information 20 may be specified in correspondence with the action set to the geofence.

### [2 Configuration example]

### [Hardware configuration example]

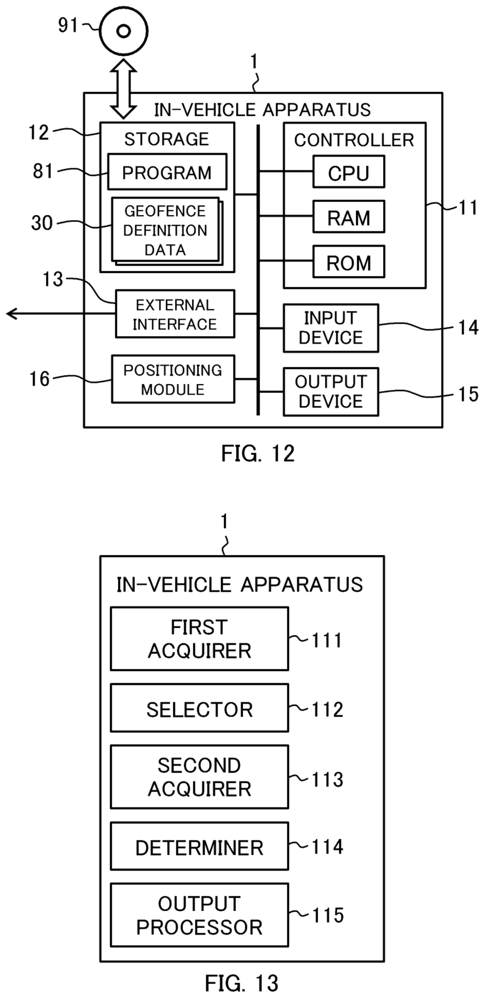

Fig. 12 schematically illustrates an example of a hardware configuration of the in-vehicle apparatus 1 according to the present embodiment. In one example, the in-vehicle apparatus 1 according to the present embodiment may be configured as a computer to which a controller 11, a storage 12, an external interface 13, an input device 14, an output device 15, and the positioning module 16 are electrically connected.

The controller 11 may include a CPU that is a hardware processor, a random access memory (RAM), and a read only memory (ROM) and is configured to execute information processing based on a program and various kinds of data. The controller 11 (CPU) is an example of a processor resource.

For example, the storage 12 may include a hard disk drive, a solid state drive, a semiconductor memory, and the like and is configured to hold any data. The storage 12, the RAM, and the ROM are examples of a memory resource of the in-vehicle apparatus 1. In one example, the storage 12 may store various kinds of information such as a program 81 and the geofence definition data 30.

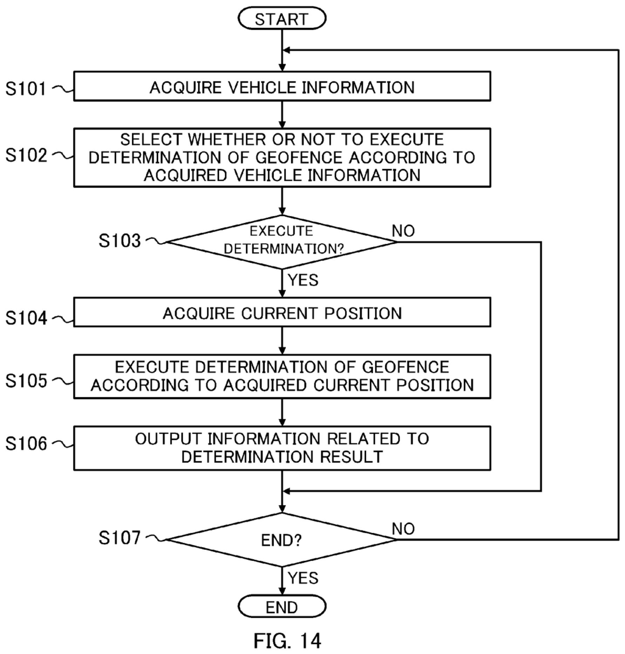

The program 81 is a program for causing the in-vehicle apparatus 1 to execute information processing (Fig. 14 to be described later) related to the determination of a geofence. The program 81 includes a series of instructions of the information processing. The program 81 is an example of the program according to the present disclosure.

In one example, at least one of the program 81 and the geofence definition data 30 may be stored in a storage medium 91 instead of the storage 12 or together with the storage 12. The storage medium 91 is configured to accumulate various kinds of information (stored programs and the like) by an electrical action, a magnetic action, an optical action, a mechanical action, or a chemical action so that the information is readable by a machine such as a computer. The storage 12 and the storage medium 91 are examples of a non-transitory storage medium. The in-vehicle apparatus 1 may acquire at least one of the program 81 and the geofence definition data 30 from the storage medium 91. The storage medium 91 may be a disk-type storage medium (CD, DVD, or the like) or a non-disk type storage medium that is a semiconductor memory (flash memory or the like). Any drive apparatus may be used to read information stored in the storage medium 91. A type of the drive apparatus may be selected according to the storage medium 91. The drive apparatus may be connected to the in-vehicle apparatus 1 by any method (for example, via the external interface 13). The storage medium 91 may include an external main memory.

The external interface 13 is configured to connect to an external apparatus in a wired or wireless manner. For example, the external interface 13 may be a Universal Serial Bus (USB) port, a communication port (communication module), or a dedicated port. A type and the number of the external interface 13 may be determined as appropriate in accordance with the embodiment. A communication standard of the communication port (communication module) may be arbitrarily selected. For example, the communication standard may be selected as appropriate from the Internet, a wireless communication network, a mobile communication network, a telephone network, and a dedicated network. The dedicated network may include an in-vehicle network (controller area network). In one example, the in-vehicle apparatus 1 may be connected to the vehicle MV via the external interface 13.

The input device 14 is configured to accept input of information. The input device 14 may be constituted of, for example, a touch panel or an operator. The output device 15 is configured to output information. The output device 15 may be constituted of, for example, a display or a speaker. The user can operate the in-vehicle apparatus 1 by using the input device 14 and the output device 15. The input device 14 and the output device 15 need not be directly connected to the in-vehicle apparatus 1 and may be indirectly connected via the external interface 13. The input device 14 and the output device 15 may be integrally configured at least in part by a touch panel display or the like.

The positioning module 16 is configured to measure a position. A type of the positioning module 16 need not be particularly limited as long as the positioning module 16 is capable of measuring positions and may be selected as appropriate in accordance with the embodiment. For example, the positioning module 16 may be constituted of a global positioning system (GPS) sensor, a global navigation satellite system (GNSS) sensor, or the like. In addition, for example, the positioning module 16 may be configured to estimate a distance to each base station (wireless access point) according to an intensity of a signal received from each base station. The positioning module 16 may be configured to measure a position by any method (such as trilateration) based on an estimated distance to each base station. In this case, the positioning module 16 may be at least partially common with the external interface 13 (communication module). In one example, the positioning module 16 may be constituted of the controller 11 (CPU) and a communication module. A type of the base station may be selected as appropriate in accordance with the embodiment. In addition, the positioning module 16 need not be built into the in-vehicle apparatus 1 and may be connected to the in-vehicle apparatus 1 via the external interface 13.

With respect to a specific hardware configuration of the in-vehicle apparatus 1, components can be omitted, replaced, or added as appropriate in accordance with the embodiment. For example, the controller 11 may include a plurality of hardware processors. The hardware processors may be constituted of a microprocessor, a field-programmable gate array (FPGA), a digital signal processor (DSP), an ECU, a graphics processing unit (GPU), an application specific integrated circuit (ASIC), and the like. At least one of the input device 14 and the output device 15 may be omitted. At least one of the program 81 and the geofence definition data 30 may be saved in an external main memory such as a NAS. The external main memory is also an example of a non-transitory storage medium. The in-vehicle apparatus 1 may be constituted of a plurality of computers. In this case, hardware configurations of the respective computers may or may not match each other. The in-vehicle apparatus 1 may be a computer designed specifically for a service to be provided, a terminal apparatus, or the like. The terminal apparatus may include a user terminal such as a smartphone or a tablet terminal.

### [Software configuration]

Fig. 13 schematically illustrates an example of a software configuration of the in-vehicle apparatus 1 according to the present embodiment. The controller 11 of the in-vehicle apparatus 1 executes instructions included in the program 81 stored in the storage 12 with the CPU. Accordingly, the in-vehicle apparatus 1 operates as a computer including a first acquirer 111, a selector 112, a second acquirer 113, a determiner 114, and an output processor 115 as software modules. In other words, in the present embodiment, each software module of the in-vehicle apparatus 1 is realized by the controller 11 (CPU).

The first acquirer 111 is configured to acquire the vehicle information 20 indicating a current state of the vehicle MV. The selector 112 is configured to select whether or not to execute a determination of a geofence according to the acquired vehicle information 20. When the selector 112 selects to execute the determination of a geofence, the second acquirer 113 is configured to acquire the current position 25 as measured by the positioning module 16. When the selector 112 selects to execute the determination of a geofence, the determiner 114 is configured to execute the determination of a geofence according to the acquired current position 25. The output processor 115 is configured to output information 40 related to a result of the determination when the selector 112 selects to execute the determination of a geofence. When the selector 112 selects not to execute the determination of a geofence, the execution of the determination of a geofence is omitted.

Note that in the present embodiment, an example where each software module of the in-vehicle apparatus 1 is realized by a general-purpose CPU is described. However, a part of or all of the software modules described above may be realized by one or a plurality of dedicated processors or chip sets. Each of the modules described above may be realized as a hardware module. With respect to the software configuration of the in-vehicle apparatus 1, modules may be omitted, replaced, or added as appropriate in accordance with the embodiment.

### [3 Operation example]

Fig. 14 is a flow chart illustrating an example of a processing procedure related to a determination of a geofence according to the present embodiment. The processing procedure described below is an example of an information processing method to be executed by a computer (in-vehicle apparatus 1). However, the processing procedure described below is merely an example and each step may be modified as much as possible. In addition, with respect to the processing procedure described below, steps can be omitted, replaced, or added as appropriate in accordance with the embodiment.

### (Step S101)

In step S101, the controller 11 operates as the first acquirer 111 and acquires the vehicle information 20 indicating a current state of the vehicle MV.

A type of vehicle information 20 to be acquired may be selected as appropriate in accordance with the embodiment such as a condition for selecting whether or not to execute a determination of a geofence. In one example, when a geofence related to the travel speed of the vehicle MV is given, the controller 11 may acquire the travel speed 201. In addition, in one example, when a geofence related to the travel mode of the vehicle MV is given, the controller 11 may acquire information indicating the current travel mode 203. In addition, in one example, when a geofence related to the photographing mode of the driving recorder DR is given, the controller 11 may acquire information indicating the current photographing mode 205 of the driving recorder DR. Once the vehicle information 20 is acquired, the controller 11 advances the processing to a next step S102.

### (Step S102)

In step S102, the controller 11 operates as the selector 112 and selects whether or not to execute a determination of a geofence according to the acquired vehicle information 20.

The controller 11 may select whether or not to execute a determination of a geofence as appropriate according to a given determination execution condition. In one example, a determination execution condition that specifies the travel speed 201 of the vehicle MV exceeding a threshold may be given. In this case, the controller 11 may select to execute the determination of a geofence in response to the travel speed 201 of the vehicle MV exceeding the threshold. The controller 11 may select not to execute the determination of a geofence in response to the travel speed 201 of the vehicle MV being less than the threshold.

In addition, in one example, a determination execution condition that specifies the travel speed 201 of the vehicle MV being less than a threshold may be given. In this case, the controller 11 may select to execute the determination of a geofence in response to the travel speed 201 of the vehicle MV being less than the threshold. The controller 11 may select not to execute the determination of a geofence in response to the travel speed 201 of the vehicle MV exceeding the threshold.

In addition, in one example, the vehicle MV may be a hybrid vehicle and a determination execution condition that specifies the current travel mode 203 of the vehicle MV being a mode other than the electric vehicle mode may be given. In this case, the controller 11 may select to execute the determination of a geofence in response to the current travel mode 203 of the vehicle MV being a mode other than the electric vehicle mode (such as the hybrid vehicle mode). The controller 11 may select not to execute the determination of a geofence in response to the current travel mode 203 of the vehicle MV being the electric vehicle mode.

In addition, in one example, a determination execution condition that specifies the current photographing mode 205 of the driving recorder DR being in an on state may be given. In this case, the controller 11 may select to execute the determination of a geofence in response to the current photographing mode 205 of the driving recorder DR being in an on state. The controller 11 may select not to execute the determination of a geofence in response to the current photographing mode 205 of the driving recorder DR being in an off state.

In one example, when the geofence definition data 30 is constituted of the main body data 301, the action data 303, and the geometry data 305, the processing of step S102 may be constituted of the processing of the first step of the reference procedure during the inside/outside determination described above. Once the controller 11 selects whether or not to execute the determination of a geofence, the controller 11 advances the processing to a next step S103.

### (Step S103)

In step S103, the controller 11 operates as the selector 112 and determines a branch destination of processing according to the selection result in step S102. The controller 11 advances processing to a next step S104 with respect to a geofence for which a selection to execute a determination has been made. On the other hand, the controller 11 omits processing of steps S104 to S106 and advances processing to step S107 with respect to a geofence for which a selection not to execute a determination has been made. In other words, when all of the geofences do not satisfy the determination execution condition, the controller 11 omits the processing of steps S104 to S106 and advances processing to step S107. When at least a part of the geofences satisfies the determination execution condition, the controller 11 advances processing to the next step S104 and executes processing of step S104 and subsequent steps with respect to the geofences that satisfy the determination execution condition. Accordingly, when selecting not to execute the determination of a geofence, the controller 11 omits the execution of the determination of the geofence (step S105). Note that in one example, a geofence for which a determination execution condition is not set may be given. With respect to this geofence, the controller 11 may omit processing of steps S101 to S103 and advances processing to step S104.

### (Step S104)

In step S104, the controller 11 operates as the second acquirer 113 and acquires the current position 25 as measured by the positioning module 16. Once the current position 25 is acquired, the controller 11 advances processing to a next step S105.

Note that the timing of executing the processing of step S104 need not be limited to such an example and may be modified as appropriate in accordance with the embodiment. In another example, the controller 11 may execute the processing of step S104 regardless of whether or not the determination of a geofence is to be executed. The controller 11 may periodically execute the processing of step S104 of acquiring the current position 25 regardless of the processing of steps S101 to S103. The processing of step S104 may be executed at any timing before the next step S105. The processing of step S104 may be executed before step S102 or step S101.

### (Step S105)

In step S105, the controller 11 operates as the determiner 114 and executes the determination of a geofence according to the acquired current position 25. In other words, the controller 11 determines whether the acquired current position 25 is inside or outside a geofence defined by the held geofence definition data 30.

In one example, in the determination processing, the controller 11 may generate a determination result configured to indicate being positioned inside or being positioned outside the defined geofence. In addition, in one example, a determination result of a previous inside/outside determination may exist with respect to at least a part of the geofences due to the continuous execution of inside/outside determinations. When there is a previous determination result, the controller 11 may generate a determination result configured to indicate staying outside the geofence, entering the geofence from outside, staying inside the geofence, or exiting the geofence to the outside according to the previous and current determination results.

In one example, when the geofence definition data 30 is constituted of the main body data 301, the action data 303, and the geometry data 305, the processing of step S105 may be constituted of the processing of the second step of the reference procedure during an inside/outside determination described above. The controller 11 advances processing to a next step S106 with respect to a geofence on which the determination processing has been completed.

### (Step S106)

In step S106, the controller 11 operates as the output processor 115 and outputs information 40 related to a result of the determination of the geofence.

An output destination and a content of the information 40 to be output may be respectively selected as appropriate in accordance with the embodiment. In one example, the controller 11 may output the determination result described above as it is. The output destination may be, for example, a RAM, the storage 12, the output device 15, or another computer (including an external main memory). For example, the controller 11 may save the current determination result in a memory resource for use in the next and subsequent inside/outside determinations.

In addition, in one example, the controller 11 may determine whether or not an action execution condition of a geofence is satisfied according to the determination result of the geofence. With respect to a geofence determined to satisfy the action execution condition, the controller 11 may execute the action specified by the action content. Outputting the information 40 related to a result of the determination of a geofence may include determining whether or not the action execution condition is satisfied and executing an action set to the geofence satisfying the action execution condition. Executing the action may include controlling operations of the vehicle MV such as issuing the warnings described above, controlling permission to output advertisement information, controlling travel modes, and controlling photographing modes. When the action to be executed includes output of the warnings and information such as the advertisement information described above, the information 40 related to a result of the determination may include information output by the action. In one example, when the geofence definition data 30 is constituted of the main body data 301, the action data 303, and the geometry data 305, the processing related to the execution of the action may be constituted of the processing of the third step and the fourth step of the reference procedure during the inside/outside determination described above. When an output device other than the output device 15 is provided in the vehicle MV, output destinations of the information 40 may include the other output device. Once output of the information 40 is completed, the controller 11 advances processing to a next step S107.

### (Step S107)

In step S107, the controller 11 determines whether or not processing is to be ended. A determination criteria may be arbitrarily set. In one example, the controller 11 may determine not to end the processing until an end instruction is given. On the other hand, when an end instruction is given, the controller 11 may determine to end the processing. For example, the end instruction may be given by any method such as terminating/suspending the application or stopping the apparatus.

When the controller 11 determines not to end the processing, the controller 11 returns processing to step S101 and once again executes processing from step S101. Accordingly, the controller 11 may continuously execute the inside/outside determinations with respect to geofences defined by the held geofence definition data 30. On the other hand, when the controller 11 determines to end the processing, the controller 11 ends the processing procedure related to the inside/outside determination of geofences according to the present operation example. Note that the timing of ending the processing need not be limited to such an example. The controller 11 may end the processing procedure related to the inside/outside determinations of geofences at any timing. In addition, in one example, the controller 11 may execute the series of processing of step S101 to step S107 in real-time.

### [Features]

In the present embodiment, the in-vehicle apparatus 1 controls whether or not to execute the determination processing of a geofence according to a current state of the vehicle MV (vehicle information 20) by the processing of step S102 and step S103. Accordingly, the execution of a determination of a geofence according to step S105 can be omitted in a situation where it is possible to determine from the state of the vehicle MV that the determination of a geofence is not required. Therefore, according to the present embodiment, since executions of wasteful determination processing can be suppressed, an improvement in efficiency of determination processing of a geofence can be expected.

### [4 Modifications]

While the embodiment of the present disclosure has been described using specific terms, the forgoing description is in all respects merely illustrative of the disclosure. The processing steps and means described in the present disclosure may be freely combined and implemented insofar as no technical contradictions arise. In addition, various improvements or modifications may be made as appropriate in the embodiment described above.

### [5 Supplement]

The processing steps and means described in the present disclosure may be freely combined and implemented insofar as no technical contradictions arise.

In addition, processing described as being performed by one apparatus may be shared and executed by a plurality of apparatuses. Alternatively, processing described as being performed by different apparatuses may be executed by one apparatus. In a computer system, what kind of hardware configuration is used to realize each function can be changed in a flexible manner.

The present disclosure can also be realized by supplying a computer program implementing the functions described in the above embodiment to a computer and having one or more processors of the computer read and execute the program. Such a computer program may be provided to the computer by a non-transitory computer-readable storage medium that can be connected to a system bus of the computer or may be provided to the computer over a network. The non-transitory computer-readable storage medium may include, for example, any type of disk, a read-only memory (ROM), a random access memory (RAM), an EPROM, an EEPROM, a magnetic card, a flash memory, an optical card, a semiconductor drive, and any type of media suitable for storing electronic instructions. The disk may include, for example, a magnetic disk and an optical disk. The magnetic disk may include, for example, a hard disk drive (HDD). The optical disk may include, for example, a CD-ROM, a DVD disk, and a Blu-ray Disc. The semiconductor drive may include, for example, a solid state drive.

## Claims

1. A program (81) for causing an in-vehicle apparatus (1) to execute an information processing method, wherein
the information processing method comprises:
acquiring vehicle information (20) indicating a current state of a vehicle (MV);
selecting whether or not to execute a determination of a geofence according to the acquired vehicle information (20);
when selecting to execute the determination of a geofence,
acquiring a current position (25) as measured by a positioning module (16),
executing the determination of a geofence according to the acquired current position (25), and
outputting information (40) related to a result of the determination; and
when selecting not to execute the determination of a geofence, omitting the execution of the determination of a geofence.

2. The program (81) according to claim 1, wherein
the current state of the vehicle (MV) indicated by the vehicle information (20) includes a travel speed (201) of the vehicle (MV), and
selecting whether or not to execute the determination of a geofence includes
selecting to execute the determination of a geofence when the travel speed (201) of the vehicle (MV) exceeds a threshold, and
selecting not to execute the determination of a geofence when the travel speed (201) of the vehicle (MV) is less than the threshold.

3. The program (81) according to claim 1, wherein
the current state of the vehicle (MV) indicated by the vehicle information (20) includes a travel speed (201) of the vehicle (MV), and
selecting whether or not to execute the determination of a geofence includes
selecting to execute the determination of a geofence when the travel speed (201) of the vehicle (MV) is less than a threshold, and
selecting not to execute the determination of a geofence when the travel speed (201) of the vehicle (MV) exceeds the threshold.

4. The program (81) according to claim 1, wherein
the current state of the vehicle (MV) indicated by the vehicle information (20) includes a current travel mode (203) of the vehicle (MV).

5. The program (81) according to claim 4, wherein
the vehicle (MV) is a hybrid vehicle,
travel modes (203) of the hybrid vehicle include an electric vehicle mode and a hybrid vehicle mode,
the geofence is related to a low emission zone, and
selecting whether or not to execute the determination of a geofence includes
selecting to execute the determination of a geofence when the current travel mode (203) of the vehicle (MV) is the hybrid vehicle mode, and
selecting not to execute the determination of a geofence when the current travel mode (203) of the vehicle (MV) is the electric vehicle mode.

6. The program (81) according to claim 1, wherein
the vehicle (MV) includes a driving recorder (DR),
the current state of the vehicle (MV) indicated by the vehicle information (20) includes a current photographing mode (205) of the driving recorder (DR),
the geofence is related to prohibiting photography,
selecting whether or not to execute the determination of a geofence includes
selecting to execute the determination of a geofence when the current photographing mode (205) of the driving recorder (DR) is in an on state, and
selecting not to execute the determination of a geofence when the current photographing mode (205) of the driving recorder (DR) is in an off state.

7. An in-vehicle apparatus (1) comprising a controller (11) configured to execute:
acquiring vehicle information (20) indicating a current state of a vehicle (MV);
selecting whether or not to execute a determination of a geofence according to the acquired vehicle information (20);
when selecting to execute the determination of a geofence,
acquiring a current position (25) as measured by a positioning module (16),
executing the determination of a geofence according to the acquired current position (25), and
outputting information (40) related to a result of the determination; and
when selecting not to execute the determination of a geofence, omitting the execution of the determination of a geofence.

8. The in-vehicle apparatus (1) according to claim 7, wherein
the current state of the vehicle (MV) indicated by the vehicle information (20) includes a travel speed (201) of the vehicle (MV), and
selecting whether or not to execute the determination of a geofence includes
selecting to execute the determination of a geofence when the travel speed (201) of the vehicle (MV) exceeds a threshold, and
selecting not to execute the determination of a geofence when the travel speed (201) of the vehicle (MV) is less than the threshold.

9. The in-vehicle apparatus (1) according to claim 7, wherein
the current state of the vehicle (MV) indicated by the vehicle information (20) includes a travel speed (201) of the vehicle (MV), and
selecting whether or not to execute the determination of a geofence includes
selecting to execute the determination of a geofence when the travel speed (201) of the vehicle (MV) is less than a threshold, and
selecting not to execute the determination of a geofence when the travel speed (201) of the vehicle (MV) exceeds the threshold.

10. The in-vehicle apparatus (1) according to claim 7, wherein
the current state of the vehicle (MV) indicated by the vehicle information (20) includes a current travel mode (203) of the vehicle (MV).

11. The in-vehicle apparatus (1) according to claim 10, wherein
the vehicle (MV) is a hybrid vehicle,
travel modes (203) of the hybrid vehicle include an electric vehicle mode and a hybrid vehicle mode,
the geofence is related to a low emission zone, and
selecting whether or not to execute the determination of a geofence includes
selecting to execute the determination of a geofence when the current travel mode (203) of the vehicle (MV) is the hybrid vehicle mode, and
selecting not to execute the determination of a geofence when the current travel mode (203) of the vehicle (MV) is the electric vehicle mode.

12. The in-vehicle apparatus (1) according to claim 7, wherein
the vehicle (MV) includes a driving recorder (DR),
the current state of the vehicle (MV) indicated by the vehicle information (20) includes a current photographing mode (205) of the driving recorder (DR),
the geofence is related to prohibiting photography,
selecting whether or not to execute the determination of a geofence includes
selecting to execute the determination of a geofence when the current photographing mode (205) of the driving recorder (DR) is in an on state, and
selecting not to execute the determination of a geofence when the current photographing mode (205) of the driving recorder (DR) is in an off state.

13. An information processing method to be executed by a computer (1), comprising:
acquiring vehicle information (20) indicating a current state of a vehicle (MV);
selecting whether or not to execute a determination of a geofence according to the acquired vehicle information (20);
when selecting to execute the determination of a geofence,
acquiring a current position (25) as measured by a positioning module (16),
executing the determination of a geofence according to the acquired current position (25), and
outputting information (40) related to a result of the determination; and
when selecting not to execute the determination of a geofence, omitting the execution of the determination of a geofence.

14. The information processing method according to claim 13, wherein
the current state of the vehicle (MV) indicated by the vehicle information (20) includes a travel speed (201) of the vehicle (MV), and
selecting whether or not to execute the determination of a geofence includes
selecting to execute the determination of a geofence when the travel speed (201) of the vehicle (MV) exceeds a threshold, and
selecting not to execute the determination of a geofence when the travel speed (201) of the vehicle (MV) is less than the threshold.

15. The information processing method according to claim 13, wherein
the current state of the vehicle (MV) indicated by the vehicle information (20) includes a travel speed (201) of the vehicle (MV), and
selecting whether or not to execute the determination of a geofence includes
selecting to execute the determination of a geofence when the travel speed (201) of the vehicle (MV) is less than a threshold, and
selecting not to execute the determination of a geofence when the travel speed (201) of the vehicle (MV) exceeds the threshold.
